# EUROPÄISCHE PATENTSCHRIFT

(11) **EP 0 837 765 B1**
(45) Veröffentlichungstag und Bekanntmachung des Hinweises auf die Patenterteilung: **29.09.1999**
(21) Anmeldenummer: 96921901.3
(22) Anmeldetag: 02.07.1996
(51) Int. Cl.: B29C 45/77, B29C 45/76

(54) **VERFAHREN ZUR ERFASSUNG DER AN EINER SPRITZGIESSMASCHINE AUFTRETENDEN KRÄFTE SOWIE VORRICHTUNG ZUR DURCHFÜHRUNG DES VERFAHRENS**
PROCESS FOR DETERMINING THE FORCES ARISING IN AN INJECTION MOULDING MACHINE AND A DEVICE FOR CARRYING OUT THE PROCESS
PROCEDE POUR DETECTER LES FORCES S'EXERCANT AU NIVEAU D'UNE PRESSE D'INJECTION, AINSI QUE DISPOSITIF POUR LA MISE EN OEUVRE DU PROCEDE

(30) Priorität: 11.07.1995 DE 19525142
(43) Veröffentlichungstag der Anmeldung: 29.04.1998
(73) Patentinhaber: Hehl, Karl, 72290 Lossburg (DE)
(72) Erfinder: Hehl, Karl, 72290 Lossburg (DE)
(74) Vertreter: Reinhardt, Harry
(86) Internationale Anmeldenummer: DE9601220
(87) Internationale Veröffentlichungsnummer: WO9702941

(56) Entgegenhaltungen:
- EP-A- 0 436 732
- EP-A- 0 513 774
- EP-A- 0 644 030
- Patent Abstracts of Japan, Band 14, Nr 127(M-947); & JP,A,01320126 (NOK CORP), 1989-12-26

## Beschreibung

Die Erfindung betrifft ein Verfahren zur Erfassung der an einem Fördermittel an einer Spritzgießmaschine zur Verarbeitung plastifizierbarer Materialien wie Kunststoffen, Pulvern und keramischen Massen auftretenden Kräfte nach dem Oberbegriff des Anspruches 1 sowie eine Vorrichtung zur Durchführung des Verfahrens nach dem Oberbegriff des Anspruches 7.

Derartige Verfahren und Vorrichtungen sind z.B. aus der DE-A 44 46 857 bekannt. Hierbei werden üblicherweise ein Materialdrucksensor in der Düse und im Formhohlraum vorgesehen, dessen Ergebnisse zwar in die Regelung Eingang finden, im übrigen jedoch nicht miteinander korrelieren. Sobald aber der Meßwert des Werkzeuginnendrucks z.B. nach Versiegelung des Spritzteils nicht mehr zur Verfügung steht, steht dieser als Eingangsgröße ebenfalls nicht mehr zur Verfügung.

Um die Schließkraft genauer zu bestimmen, werden in der DE-A 39 39 728 zwei Druckmeßeinrichtungen vorgesehen, von denen eine dem Formhohlraum und eine der Formtrennebene zugeordnet ist. Für die Schließkraftermittlung steht dennoch nur ein Sensor zur Verfügung.

Eine andere Möglichkeit zur Kraftermittlung besteht bei einer hydraulischen Spritzgießmaschine gemäß der EP-A 644 030 darin, die Kräfte auf beiden Seiten des Einspritzkolbens zu erfassen und voneinander zu subtrahieren. Eine derartige Kraftmessung berücksichtigt jedoch nicht die Verluste, die zwischen Fördermittel und Einspritzkolben auftreten können.

Zur Ermittlung des Forminnendrucks können nach der EP-A 130 769 auch mehrere Sensoren in beiden Formhälften vorgesehen werden, die jedoch nicht auf unterschiedliche Kraftmeßbereiche ausgelegt sind.

In der EP-B 331 735 z.B. werden meist statische Sensoren zur Erfassung der während eines Spritzzyklus auftretenden Einspritzkräfte im Lagerbereich des Fördermittels wie z.B. einer Förderschnecke vorgesehen. Die dabei gewonnenen Meßwerte finden üblicherweise Eingang in eine kraft- oder druckabhängige Einspritzregelung, sofern Meßwerte über den Werkzeuginnendruck nicht ausreichend oder aufgrund des verwendeten Materials ab einem bestimmtenn Zeitpunkt im Spritzzyklus nicht mehr zuverlässig gewonnen werden können.

Aus der EP-B 436 732 ist ferner bekannt, einen Drucksensor zum gleichen Zweck im Bereich der Förderschnecke selbst anzuordnen.

Die bekannten Vorrichtungen haben jedoch das Problem, daß sich die Einspritzkraft an einer Spritzgießmaschine während des eigentlichen Einspritzens in einem sehr hohen Bereich von meist mehreren Tonnen bewegt. Während des Dosiervorgangs, also während der Materialaufbereitung hingegen soll sich die Auflösung lediglich im Kilogramm-Bereich bewegen. Statische Kraftaufnehmer können zwar nun ausgehend von einem Nullpunkt bis zu den hohen Kräften durchgängig messen, ohne ihren Nullpunkt zu verlieren, jedoch verfügen sie gerade in dem unteren Bereich nicht über die gewünschte Auflösung oder, falls sie über die Auflösung verfügen, sind sie nicht geeignet, die groben Kräfte zu messen.

Um diesem Problem Herr zu werden, werden heutzutage teure sogenannte dynamische Kraftaufnehmer als Sensoren eingesetzt. Diese haben jedoch den Nachteil, daß ihre zuverlässige Anwendung verlangt, daß im Ablauf des Zyklus irgendwann ein Reset möglich sein muß. Ohne diesen Reset driftet der Sensor weg und verläßt seine Null-Lage. Da bei einer Kunststoff-Spritzgießmaschine während des Einspritzvorgangs zu keinem Zeitpunkt ein definierter Kraft-Nullzustand erreicht wird, kann dieser Reset ohne die Gefahr eines Aufschaukelns nicht erzielt werden.

Ausgehend von diesem Stand der Technik liegt der vorliegenden Erfindung die Aufgabe zugrunde, zuverlässige und den jeweiligen Anforderungen an die Auflösung genügende Meßwerte während des gesamten Spritzzyklus zur Verfügung zu stellen.

Diese Aufgabe wird durch ein Verfahren nach Anspruch 1 sowie eine Vorrichtung nach Anspruch 7 gelöst.

Dies geschieht dadurch, daß nun zwei verschiedene Systeme vorgesehen werden, wobei der hinsichtlich seiner Null-Lage bestimmte statische Sensor für einen kleinen Bereich der Messung zuständig ist, ab einem gewissen Meßwert jedoch die Messung an einen weiteren Sensor übergibt, der geeignet ist, auch die höheren Kräfte zu erfassen. Am Übergabepunkt wird zugleich eine Eichung des weiteren Sensors vorgenommen. Dadurch kann der statische Sensormit hoher Auflösung im Dosierbereich eingesetzt werden, ohne daß zu befürchten ist, daß er von den hohen Einspritzkräften zerstört wird. Gleichzeitig kommt man jedoch den Anforderungen an eine langlebige und zuverlässige Meßwerterfassung dadurch nach, daß am Übergabepunkt stets ein bestimmter Kraftwert gegeben ist, der bedarfsweise als Eichpunkt für den weiteren Sensor dienen kann.

### KURZBESCHREIBUNG DER FIGUREN

- Fig. 1: eine Draufsicht auf eine Kunststoff-Spritzgießmaschine,

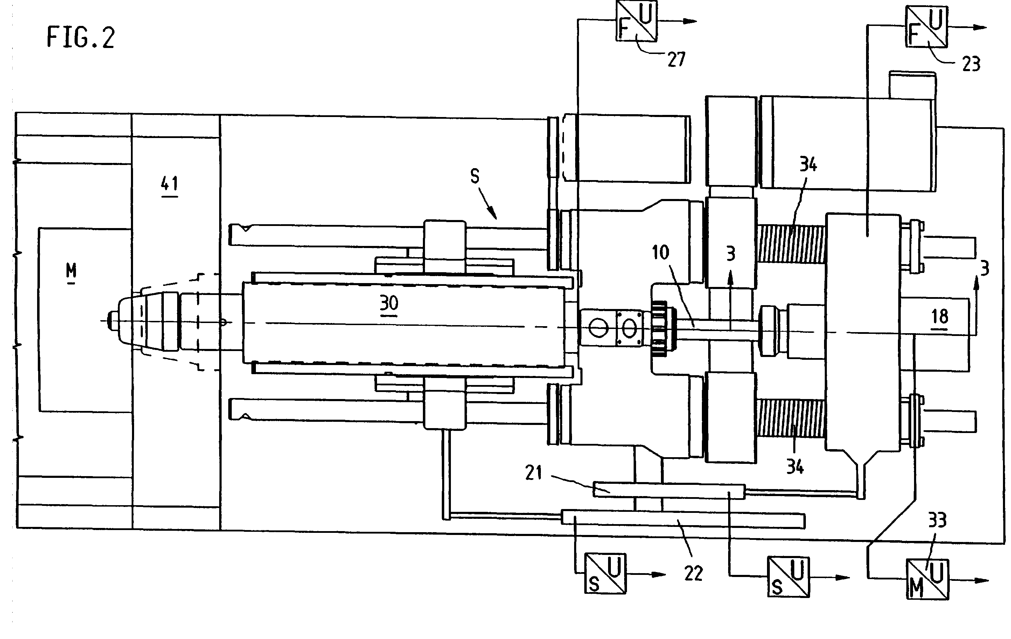

- Fig. 2: einen vergrößerten Ausschnitt aus Fig. 1 im Bereich der Spritzgießeinheit,
- Fig. 3: einen Schnitt nach Linie 3-3 von Fig. 2,
- Fig. 4: eine Darstellung gemäß Fig. 3 in einem weiteren Ausführungsbeispiel,
- Fig. 5: ein Schaltschema für die Beschaltung der Sensoren,
- Fig. 6: den Kraftverlauf während eines Einspritzvorgangs.

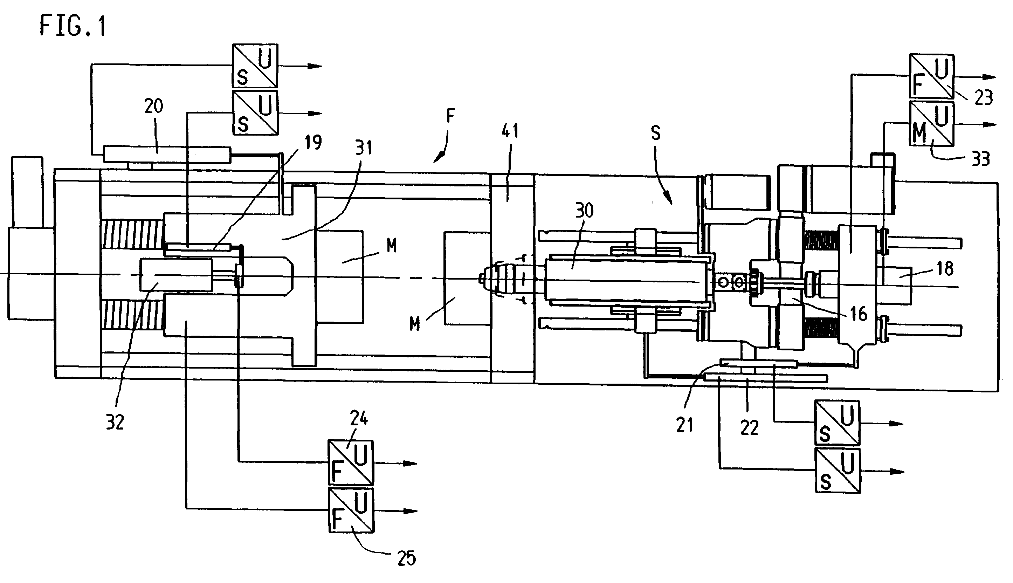

In Fig. 1 ist schematisch eine Kunststoff-Spritzgießmaschine dargestellt, wobei auf der linken Seite eine Formschließeinheit F und auf der rechten Seite eine Spritzgießeinheit S dargestellt ist. Es handelt sich hierbei um eine elektromechanisch angetriebene Spritzgießeinheit, wobei z.B. über Spindeln 34 die Spritzgießeinheit bewegt wird. Der Formschließeinheit ist ein Schließmechanismus 31 zugeordnet, der hier ebenfalls über Spindeln bewegt wird, wobei selbstverständlich auch andere elektromechanische Antriebsmechanismen aber auch andere Antriebsarten wie hydraulisch, pneumatisch oder dergleichen formschließseitig wie spritzgießseitig vorgesehen werden können. Beiden Seiten der Spritzgießmaschine sind Absolut-Wegmeß-Systeme zugeordnet. Formschließseitig werden Absolut-Wegmeß-Systeme 19, 20 in Form von Linearpotentiometern vorgesehen, deren Werte über Streckenspannungswandler an eine übergeordnete, zeichnerisch nicht dargestellte Steuereinheit übergeben werden. Spritzgießseitig ist für das Anlegen der Düse am stationären Formträger 41 als Absolut-Wegmeß-System 22 das Linearpotentiometer mit zugehörigem Streckenspannungswandler und für die Bewegung der Förderschnecke das Absolut-Weg-Meßsystem 21 als Linearpotentiometer mit zugehörigem Streckenspannungswandler vorgesehen. Über einen Rotationsantrieb 18 wird im vorliegenden Fall eine als Fördermittel 10 ausgebildete Förderschnecke bewegt. Dem Rotationsantrieb 18 ist ein Momentaufnehmer 33 zugeordnet.

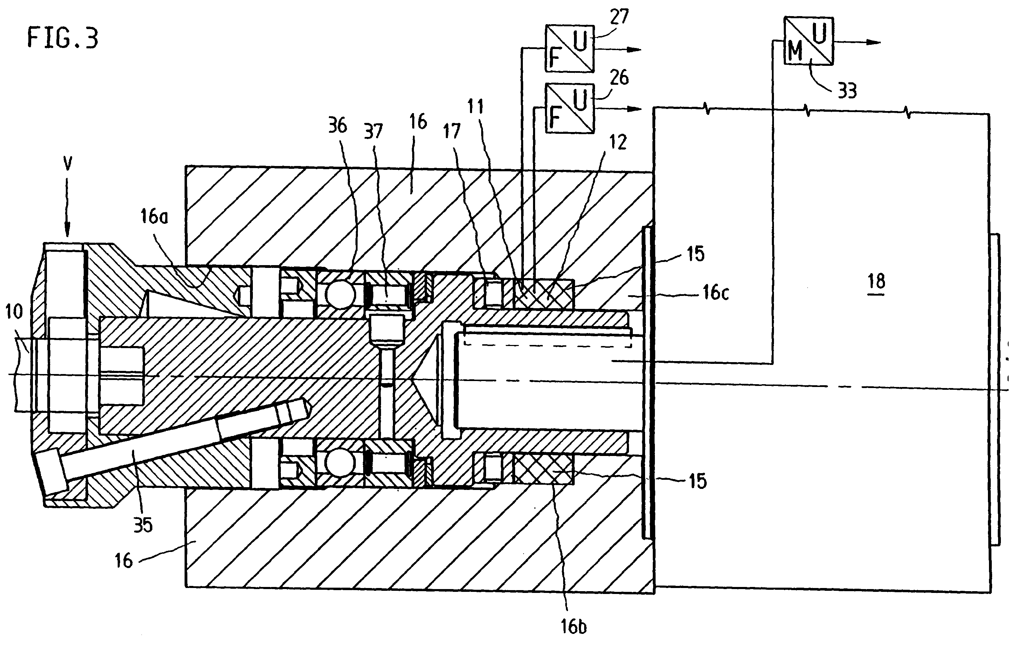

Fig. 3 zeigt in einem vergrößerten Ausschnitt nun den Lagerbereich für das Fördermittel 10. Auf der linken Seite ist hierbei ein Verriegelungsmechanismus V zu erkennen, der über Befestigungsmittel 35 mit dem Schaft des Rotationsantriebs 18 in Verbindung steht. Bezüglich der genauen Ausgestaltung dieses Verriegelungsmechanismus wird auf DE-C 42 36 282 verwiesen.

In einer Bohrung 16a der Einspritzbrücke 16 ist nun dieser Schaft an Lagern 36, 37 gelagert, wobei auf der da stationären Formträger 41 gegenüberliegenden Seite der Einspritzbrücke 16 der Rotationsmotor 18 angeordnet ist. Im Grund der Bohrung 16a ist eine Ausnehmung 16b vorgesehen, die im vorliegenden Fall einen Kraftmeßring 15 aufnimmt. Im Kraftmeßring befinden sich hier nun zwei Sensoren, wobei die von diesen Sensoren ermittelten Meßwerte über die den Kraftaufnehmern 26, 27 zugeordneten Kraftspannungswandler der Steuereinheit übermittelt werden. Ein derartiger Kraftmeßring 15 ist vor allem dann sinnvoll, wenn ein statischer und dynamischer Sensor vorgesehen werden, da sie in diesem Fall leicht im Kraftmeßring 15 zu integrieren sind. Der erste statische Sensor 11 dient zur Erfassung der während des Dosierens und der Materialaufbereitung in der Spritzgießeinheit S auftretenden geringen Kräfte in einem unteren Meßbereich 81, während der dynamische Sensor 12 im restlichen Meßbereich B2 arbeitet, worauf weiter unten noch näher eingegangen wird. Der Kraftmeßring 15 ist zwischen Axialdrucklager 17 und Anformung 16c der Einspritzbrücke 16 so angeordnet, daß er den Antriebsschaft 18a des Rotationsantriebs 18 umschließt.

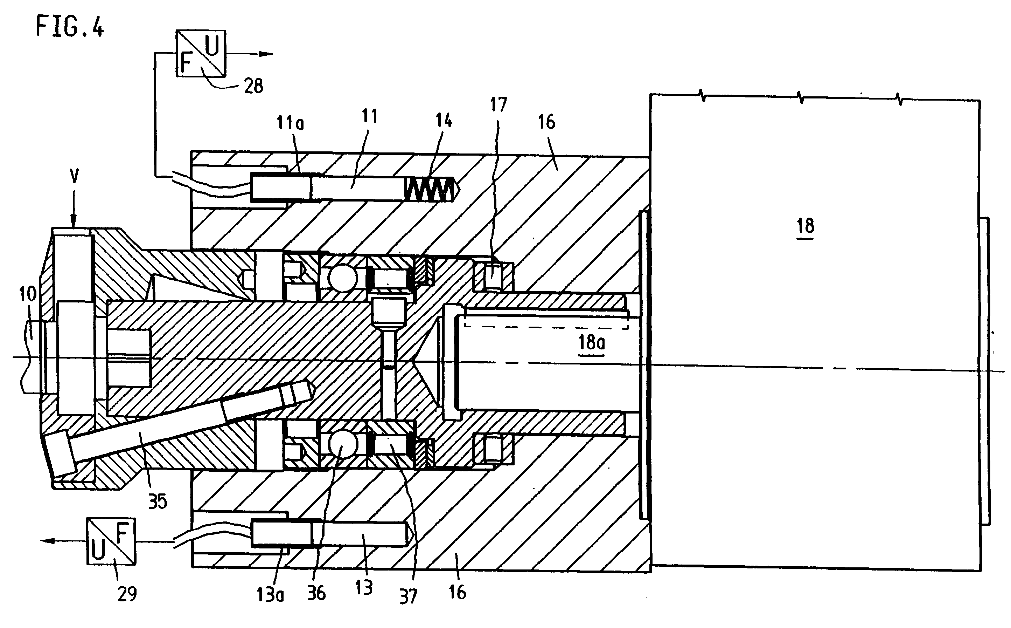

Alternativ ist eine Ausgetaltung gemäß Fig. 4 möglich. Hier ist ein erster statischer Sensor 11 vorgesehen, der durch eine Feder 14 federbelastet ist. Dieser Sensor und auch der zweite statische Sensor 13 sind mit Gewindeabschnitten 11a,13a in der Einspritzbrücke verschraubt, so daß Verformungen der Einspritzbrücke 16 auf die Sensoren einwirken und zur Meßwertbestimmung der auftretenden Kräfte herangezogen werden können. Die Kraft der Feder 14 hat einen degressiven Verlauf und ist auf einen Grenzwert F1 so abgestimmt, daß bei Überschreiten dieses Grenzwerts der erste statische Sensor 11 aus dem Kraftfluß dadurch ausgekoppelt wird, daß die Feder eine weitere Belastung des Sensor unterbindet. Dadurch wird eine Zerstörung des Sensors bei maximaler Einspritzkraft verhindert, wobei die Feder 14 wie ein Bypass wirkt.

Der erste statische Sensor 11 übernimmt somit einen Meßbereich B1 geringerer Kräfte von z.B. 1 bis 25 % der maximalen Einspritzkraft, vorzugsweise einen Kraftbereich der üblicherweise während des Dosierens nicht überschritten wird. Im darüberliegenden Meßbereich B2 arbeitet ein weiterer Sensor als zweiter statischer Sensor 13. Der erste statische Sensor 11 gibt ein Signal über den Kraftaufnehmer 28 und der zweite statische Sensor 13 ein Signal über den Kraftaufnehmer 29 an die Steuereinheit. Die Sensoren können dabei als Dehnungs-Meßstreifen ausgebildet werden. In beiden Fällen können die Sensoren justiert bzw. entsprechend vorgespannt werden, um sowohl Zugkräfte als auch Druckkräfte messen zu können. Dadurch ist gewährleistet, daß eine Überwachung bzw. Regelung oder Steuerung während des gesamten Spritzzyklus möglich ist.

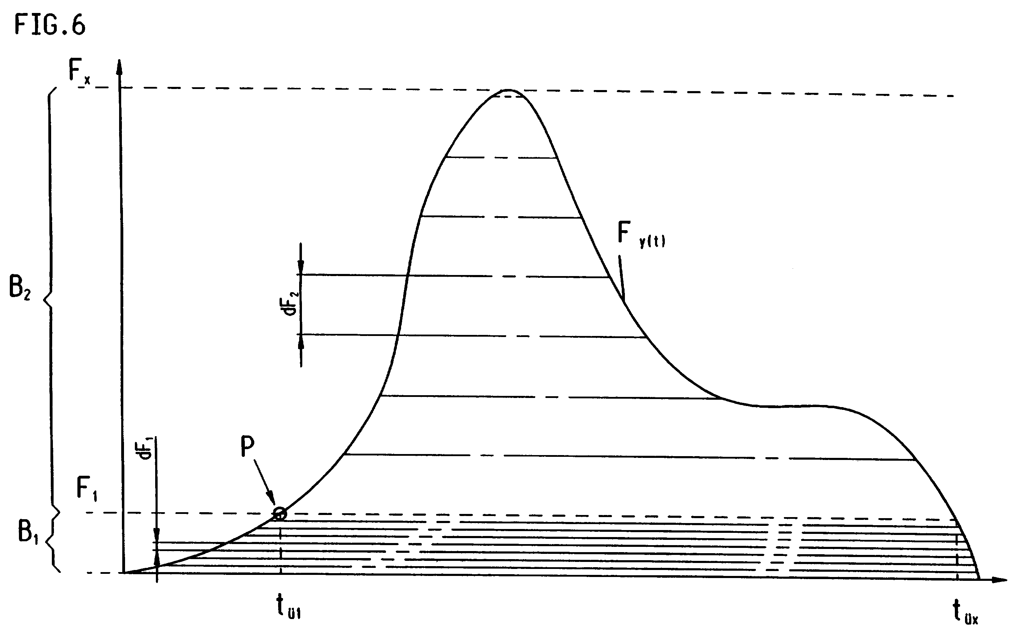

Mit den Sensoren werden die an dem Fördermittel 10 der Spritzgießeinheit S auftretenden Kräfte, die kennzeichnend sind für einen Druck, der vom zu verarbeitenden Material auf das Fördermittel 10 ausgeübt wird, z.B. als Eingangssignal für eine Einspritzregelung erfaßt. Wenigstens ein erster statischer Sensor 11 besitzt eine hohe Auflösung und dient im wesentlichen zur Erfassung der während der Materialaufbereitung in der Spritzgießeinheit S auftretenden Kräfte in Form eines ersten Meßwertes. Diesem ersten statischen Sensor 11 ist ein weiterer Kraftsensor in Form eines zweiten statischen Sensors 13 oder eines dynamischen Sensors 12 zugeordnet, der im wesentlichen die während des Einspritzens auftretenden Kräfte in Form eines zweiten Meßwertes erfaßt. Ein Umschalten oder Übergeben erfolgt an einem Übergabepunkt P (Fig.6), sobald der erste Meßwert einen im Meßbereich des ersten statischen Sensors 11 liegenden Grenzwert F1 erreicht. Zum Übergabepunkt P übergibt z.B. zur Zeit t_{ü1} der erste statische Sensor 11 die weitere Erfassung der Kraft an den weiteren Sensor, wobei an diesem Punkt die Kraft durch den ersten Meßwert bestimmt ist, so daß zugleich der weitere Sensor geeicht oder genullt werden kann. Insbesondere für einen dynamischen Sensor 12 ergibt sich somit ein Start- oder Nullpunkt, so daß in jedem Spritzzyklus ein Reset des dynamischen Sensors erfolgt und ein Wegdriften des Meßwertes bzw. Sensorsignals vermieden wird. Der dynamische Sensor 12 oder der zweite statische Sensor 13 ist dann aber geeignet, die gegenüber den bei der Materialaufbereitung auftretenden hohen Einspritzkräfte zu erfassen.

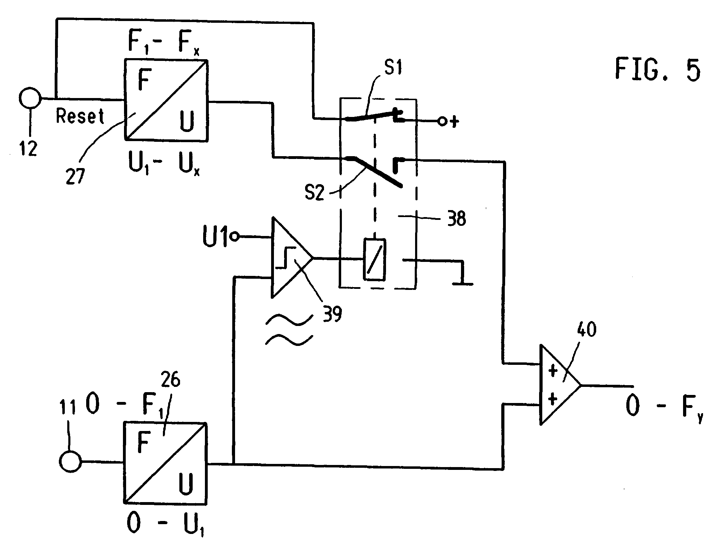

Fig. 5 zeigt die Wirkungsweise der in den Fign. 3 und 4 gezeigten Anwendung von zwei Sensoren. Der erste statische Sensor 11 liefert über den Kraftaufnehmer 26 einen Meßwert, der dem Vergleicher 39 zugeleitet wird und dort mit einem Referenzwert verglichen wird, der dem Grenz wert F1 entspricht. Je nach Ergebnis dieses Vergleichs ist der zweite Meßwert des dynamischen Sensors 12 noch nicht zugeschaltet, in diesem Fall ergibt sich eine Stellung der Schalter S1, S2 gemäß dem Schema. Somit ergibt sich im Summierer 40 lediglich der erste Meßwert, der vom ersten statischen Sensor 11 ermittelt wird. Wird der Grenzwert F1 erreicht, gibt das Steuermittel 38 ein Signal an die Schalter S1, S2. Somit wird der Schalter S1 geöffnet und der Kraftaufnehmer 27 verläßt den Resetzustand. Von nun an gibt auch der dynamische Sensor 12 mittels des Kraftaufnehmers 27 einen zweiten Meßwert ab. Im Summierer 40 stehen nun zwei Meßwerte an, die miteinander addiert werden, so daß sich auch oberhalb des Grenzwertes F1 bis zur maximalen Einspritzkraft Fx ein durchgängiges Meßergebnis von Null bis Fx ergibt. Dies führt zu der geforderten Bereichseinteilung. Fig. 6 verdeutlicht dabei im unteren Meßbereich B1 die höhere Auflösung dF1 des dort wirkenden ersten statischen Sensors gegenüber der im oberen Bereich geringeren Auflösung dF2 des weiteren Sensors. Im Beispiel der Fig. 3 sitzt diese Auswertelogik schon im Kraftmeßring 15, so daß die Steuerung von dieser Entscheidung entlastet wird. In Fig. 4 sitzt die Auswertelogik z.B. im zeichnerisch nicht dargestellten Schaltschrank.

Werden zwei statische Sensoren verwendet, übernimmt der eine Sensor z.B. den Meßbereich niedrigerer Kräfte wie z.B. der ersten 10%, während der zweite Sensor den restlichen Meßbereich abdeckt. Somit kann im Bereich des Dosierens die relativ geringe Kraft mit dem hochauflösenden Sensor, der jedoch nur für einen bestimmten Meßbereich geeignet sein muß, sehr genau und preisgünstig ausgeregelt werden. Im Bereich höherer Kräfte steht dann der ebenfalls nur für diesen Bereich bestimmte und insofern auch mit einer geringeren Auflösung arbeitende weitere Sensor zur Verfügung. Damit eine Zerstörung des im Niedrigkraftbereich arbeitenden Sensors vermieden wird, wird dieser gegen die Kraft einer Feder beweglich gelagert.

Aus Fig. 6 läßt sich eine entsprechende Kraftmeßbereichs-Aufteilung entnehmen. Im Meßbereich der Kraft F von Null bis F1 arbeitet der statische Sensor 11, während darüber im Bereich oberhalb des vorbestimmten Grenzwertes F1 bis zur maximalen Einspritzkraft Fx der weitere Sensor arbeitet. Am Übergabepunkt zur Zeit t_{ü1} erfolgt eine Übergabe und im gesamten darauffolgenden Bereich bis zum Zeitpunkt t_{üx} wird die Kraft im wesentlichen durch den weiteren Sensor in Form des Kraft-Zeitverlaufes F_{y(t)} ermittelt. Nach dem Zeitpunkt t_{üx} wird die 'Arbeit' wieder an den ersten statischen Sensor 11 übergeben.

### Liste der Bezugszeichen (kein Bestandteil der Anmeldungsunterlagen

- 10: Fördermittel
- 11: erster statischer Sensor
- 12: dynamischer Sensor
- 13: zweiter statischer Sensor
- 14: Feder
- 15: Kraftmeßring
- 16: Einspritzbrücke
- 16a: Bohrung
- 16b: Ausnehmung
- 17: Axialdrucklager
- 18: Rotationsantrieb
- 18a: Antriebsschaft
- 19-22: Absolut-Wegmeß-System
- 23-29: Kraftaufnehmer
- 30: Plastifizierzylinder
- 31: Schließmechanismus
- 32: Auswerfereinheit
- 33: Momentaufnehmer
- 34: Spindel
- 35: Befestigungsmittel
- 36, 37: Lager
- 38: Steuermittel
- 39: Vergleicher
- 40: Summierer
- 41: stationärer Formträger
- F: Formschließeinheit
- M: Gießform
- P: Übergabepunkt
- S: Spritzgießeinheit
- S1, S2: Schalter
- V: Verriegelungsmechanismus

## Patentansprüche

1. Verfahren zur Erfassung der an einem Fördermittel (10) an einer Spritzgießeinheit (S) einer Spritzgießmaschine auftretenden Kräfte, die kennzeichnend sind für einen Druck, der vom zu verarbeitenden Material auf das Fördermittel (10) ausgeübt wird, mit wenigstens einem ersten Sensor (11) und einem weiteren Kraftsensor (12, 13), der die während des Einspritzens auftretenden Kräfte als zweiten Meßwert erfaßt,
dadurch gekennzeichnet, daß der erste Sensor (11) ein statischer Sensor ist und daß, sobald der Meßwert des ersten Sensors (11) einen im Meßbereich des ersten Sensors (11) liegenden Grenzwert (F1) erreicht, vom ersten statischen Sensor (11) die weitere Erfassung der Kräfte an den weiteren Sensor (12, 13) übergeben wird, wobei der Grenzwert (F1) zugleich als Eichwert für den weiteren Sensor dient.

2. Verfahren nach Anspruch 1, dadurch gekennzeichnet, daß der Grenzwert (F1) den Ausgangspunkt für die Krafterfassung des weiteren Sensors bildet.

3. Verfahren nach Anspruch 1, dadurch gekennzeichnet, daß der Grenzwert (F1) größer ist als die bei der Materialaufbereitung in der Spritzgießeinheit im Regelfall entstehenden Kräfte.

4. Verfahren nach Anspruch 1, dadurch gekennzeichnet, daß der weitere Sensor ein dynamischer Sensor (12) ist, der am Übergabepunkt (P) genullt wird.

5. Verfahren nach Anspruch 1, dadurch gekenn- zeichnet, daß der weitere Sensor ein zweiter statischer Sensor (13) ist, der die hohen Kräfte während des Einspritzens erfaßt.

6. Verfahren nach Anspruch 1, dadurch gekennzeichnet, daß der erste Sensor (11) gegen die Kraft einer Feder (14) bei Überschreiten des Grenzwertes (F1) aus dem Kraftfluß ausgekoppelt wird.

7. Vorrichtung zur Erfassung der an einem Fördermittel (10) an einer Spritzgießeinheit (S) einer Spritzgießmaschine auftretenden Kräfte, die kennzeichnend sind für den Druck, der vom zu verarbeitenden Material auf das Fördermittel (10) ausgeübt wird, mit wenigstens einem ersten Sensor (11) und einem weiteren Kraftsensor (12), der die während des Einspritzens auftretenden Kräfte als zweiten Meßwert erfaßt,
dadurch gekennzeichnet, daß der erste Sensor (11) ein statischer Sensor ist und der weitere Kraftsensor ein dynamischer Sensor (12) ist, die in einem Kraftmeßring (15) eingebaut sind, der an der Einspritzbrücke (16) der Spritzgießeinheit (S) zwischen Axialdrucklager (17) und einer Anformung (16c) der Einspritzbrücke (16) angeordnet ist, wobei ein bestimmter Grenzwert (F) im Meßbereich des statischen Sensors (11) den dynamischen Sensor (12) eicht.

8. Vorrichtung nach Anspruch 7, dadurch gekennzeichnet, daß das Fördermittel (10) eine Förderschnecke ist und daß der Kraftmeßring (15) einen Antriebsschaft (18a) eines Rotationsantriebes (18) für die Förderschnecke umschließt.

9. Vorrichtung nach Anspruch 7, dadurch gekennzeichnet, daß der erste statische Sensor (11) gegen die Kraft einer Feder (14) beweglich gelagert ist, deren Federkraft auf den Grenzwert (F1) so abgestimmt ist, daß bei Überschreiten des Grenzwertes (F1) der erste Sensor aus dem Kraftfluß ausgekoppelt wird.

## Claims

1. Method of determining the forces arising on a feeding means (10) on an injection moulding unit (S) of an injection moulding machine, which are characteristic for a pressure which is exercised on the feeding means (10) by the material to be processed, with at least one first sensor (11) and one further force sensor (12, 13) which detects the forces arising during the injection process as the second measured value,
**characterised in that** the first sensor (11) is a static sensor and in that, as soon as the measured value of the first sensor (11) reaches a limit value (F1) lying in the measuring range of the first sensor (11), the further detection of the forces is transferred from the first static sensor (11) to the further sensor (12, 13), the limit value (F1) serving simultaneously as the calibration value for the further sensor.

2. Method according to claim 1, **characterised in that** the limit value (F1) forms the starting point for the force detection of the further sensor.

3. Method according to claim 1, **characterised in that** the limit value (F1) is greater than the forces normally arising during the material preparation in the injection moulding unit.

4. Method according to claim 1, **characterised in that** the further sensor is a dynamic sensor (12) which is zeroised at the transfer point (P).

5. Method according to claim 1, **characterised in that** the further sensor is a second static sensor (13) which detects the high forces during the injection process.

6. Method according to claim 1, **characterised in that** the first sensor (11) is decoupled from the force flux against the force of a spring (14) when the limit value (F1) is exceeded.

7. Device for detecting the forces arising on a feeding means (10) on an injection moulding unit (S) of an injection moulding machine, which are characteristic for the pressure which is exercised on the feeding means (10) by the material to be processed, with at least one first sensor (11) and one further force sensor (12), which detects the forces arising during the injection process as a second measured value, **characterised in that** the first sensor (11) is a static sensor and the further force sensor is a dynamic sensor (12), both sensors being integrated in a force measuring ring (15) which is disposed on the injection bridge (16) of the injection moulding unit (S) between the axial pressure bearing (17) and a forming (16c) of the injection bridge (16), a specific limit value (F) in the measuring range of the static sensor (11) calibrating the dynamic sensor (12).

8. Device according to claim 7, **characterised in that** the feeding means (10) is a feed screw, and in that the force measuring ring (15) encloses a drive shaft (18a) of a rotational drive (18) for the feed screw.

9. Device according to claim 7, **characterised in that** the first static sensor (11) is mounted so as to be movable against the force of a spring (14), the spring force of which is so matched to the limit value (F1) that, when the limit value (F1) is exceeded, the first sensor is decoupled from the force flux.

## Revendications

1. Procédé pour détecter les forces qui s'exercent sur un moyen de transport (10) au niveau d'une unité de moulage par injection (S) d'une presse d'injection et qui sont caractéristiques d'une pression qui est exercée par le matériau à transformer sur le moyen de transport (10), comportant au moins un premier capteur (11) et un capteur de force (12,13) complémentaire qui enregistrent les forces s'exerçant pendant l'injection sous la forme d'une deuxième valeur de mesure, caractérisé en ce que le premier capteur (11) est un capteur statique et en ce que le premier capteur statique (11) transmet au capteur (12,13) complémentaire la suite de la détection des forces, dès que la valeur de mesure du premier capteur (11) atteint une valeur limite (F1) située dans la plage de mesure du premier capteur (11), la valeur limite (F1) servant en même temps de valeur d'étalonnage pour le capteur complémentaire.

2. Procédé selon la revendication 1, caractérisé en ce que la valeur limite (F1) forme le point de départ de la détection des forces du capteur complémentaire.

3. Procédé selon la revendication 1, caractérisé en ce que la valeur limite (F1) est supérieure aux forces se produisant en règle générale lors de la préparation du matériau dans l'unité de moulage par injection.

4. Procédé selon la revendication 1, caractérisé en ce que le capteur complémentaire est un capteur dynamique (12) qui est mis à zéro au point de transfert (P).

5. Procédé selon la revendication 1, caractérisé en ce que le capteur complémentaire est un deuxième capteur statique (13) qui détecte les forces élevées pendant l'injection.

6. Procédé selon la revendication 1, caractérisé en ce que le premier capteur (11) est désaccouplé du flux des forces, à l'encontre de la force d'un ressort (14), lorsque la valeur limite (F1) est dépassée.

7. Dispositif pour détecter les forces qui s'exercent sur un moyen de transport (10) au niveau d'une unité de moulage par injection (S) d'une presse d'injection et qui sont caractéristiques d'une pression qui est exercée par le matériau à transformer sur le moyen de transport (10), comportant au moins un premier capteur (11) et un capteur de force (12) complémentaire qui enregistrent les forces s'exerçant pendant l'injection sous la forme d'une deuxième valeur de mesure, caractérisé en ce que le premier (11) est un capteur statique et le capteur de force complémentaire est un capteur dynamique (12), ces capteurs étant intégrés dans un anneau de mesure de force (15) qui est disposé au droit du pont d'injection (16) de l'unité de moulage par injection (S) entre le palier de pression axiale (17) et un bossage (16c) du pont d'injection (16), une valeur limite (F) déterminée, dans la plage de mesure du capteur statique (11) étalonnant le capteur dynamique (12).

8. Dispositif selon la revendication 7, caractérisé en ce que le moyen de transport (10) est une vis sans fin de transport et en ce que l'anneau de mesure de force (15) entoure une tige d'entraînement (18a) d'un dispositif d'entraînement en rotation (18) pour la vis sans fin de transport.

9. Dispositif selon la revendication 7, caractérisé en ce que le premier capteur statique (11) est monté déplaçable à l'encontre de la force d'un ressort (14) dont la force est adaptée à la valeur limite (F1) de manière qu'en cas de dépassement de la valeur limite (F1) le premier capteur soit désaccouplé du flux des forces.
